# FASCICULE DE BREVET EUROPEEN

(11) **EP 0 343 194 B1**
(45) Date de publication et mention de la délivrance du brevet: **17.03.1993**
(21) Numéro de dépôt: 88905890.5
(22) Date de dépôt: 28.06.1988
(51) Int. Cl.: G07G 1/14

(54) **INSTALLATION DE VENTE ET APPAREIL DE POINT DE VENTE**
VERKAUFSEINRICHTUNG UND DAZUGEHÖRIGER VERKAUFSAUTOMAT
SALES INSTALLATION AND SELLING MACHINE THEREFOR

(30) Priorité: 29.06.1987 FR 8709195
(43) Date de publication de la demande: 29.11.1989
(73) Titulaire: KANTOR-LAKIR, Georges Alain Jean Luc, F-94210 La Varenne (FR)
(72) Inventeur: KANTOR-LAKIR, Georges Alain Jean Luc, F-94210 La Varenne (FR)
(74) Mandataire: Arnaud, Jean Pierre Alfred
(86) Numéro de dépôt international: FR8800343
(87) Numéro de publication internationale: WO8900321

(56) Documents cités:
- DE-A- 2 425 572
- DE-A- 2 656 393
- US-A- 3 335 407
- US-A- 4 075 696
- US-A- 4 303 916
- US-A- 4 441 160
- RESEARCH DISCLOSURE, no. 240, April 1984, Havant, Hampshire, GB; "Automatic teller machine with touch sensitive display screen" page 163

## Description

La présente invention concerne une installation comprenant au moins un appareil de point de vente, ainsi qu'un appareil de point de vente destiné à une telle installation.

Les appareils de point de vente utilisés pour l'exécution de transactions comportent en général un dispositif de saisie de données, un dispositif de saisie de commandes et un dispositif d'exécution. Dans un cas très courant, le dispositif de saisie de données est simplement constitué par un clavier numérique permettant la saisie du prix d'un article faisant l'objet de la transaction. Le dispositif de saisie de commandes peut comporter simplement une touche "total" qui, lorsqu'elle est manoeuvrée, provoque le fonctionnement du dispositif d'exécution qui assure lui-même la totalisation des prix des articles saisis précédemment, l'impression d'un ticket portant les prix de tous les articles et leur somme, et l'ouverture d'un tiroir-caisse. L'appareil comporte un double de toutes les transactions sous forme d'un double des tickets imprimé sur une bande enroulée.

On s'est vite rendu compte que ce type d'appareil ne permettait pas de connaître exactement les articles vendus, par exemple afin d'en commander d'autres à leur place. On a donc cherché à perfectionner ces appareils par saisie d'un nombre plus important d'informations. Cependant, une telle saisie de données nombreuses est longue et source d'erreurs. Elle ne se prête donc pas à une utilisation intensive à des points de vente.

Par exemple, le document US-A-3 335 407 décrit un appareil de point de vente selon le préambule de la revendication 4, c'est-à-dire comprenant un dispositif de saisie tactile, un premier dispositif de saisie de données représentatives d'au moins un article, comprenant une première partie du dispositif de saisie tactile, un second dispositif de saisie de données de commande comprenant une seconde partie du dispositif de saisie tactile, un dispositif d'exécution destiné à effectuer au moins une opération de validation d'une transaction relative à l'article et à obéir aux commandes du dispositif de saisie de données de commande et à exécuter les opérations indiquées par celles-ci, et un dispositif de visualisation. Cet appareil ancien, de réalisation électromécanique, a une structure figée qui ne s'adapte pas aux changements d'articles.

On a alors essayé de rendre automatique cette saisie des données. On a ainsi utilisé des appareils de lecture de "codes à barres" portés par de très nombreux articles. Dans ce cas, l'appareil est relié à un puissant système de gestion de données qui, lorsqu'il reçoit le code lu, renvoie le prix de l'article correspondant qui peut alors être imprimé sur un ticket ou simplement affiché. L'indication de la nature de l'article n'est en général pas reportée sur le ticket imprimé. De toute manière, il ne s'agit là que d'une possibilité de contrôle a posteriori puisque la transaction a été prise en compte dès la lecture du code. Il faut en outre noter que ce système, très lourd et centralisé, est entièrement à la merci d'une défaillance d'un élément commun et surtout ne peut pas prendre en compte les articles ne portant pas de code à barres ou refusés par le lecteur. Il ne reste plus alors qu'à procéder à une saisie manuelle qui, comme indiqué précédemment, est longue et source d'erreurs.

Lorsque les articles objets des transactions ne portent pas un tel code, et lorsqu'on souhaite cependant effectuer une véritable gestion à partir des transactions, on doit saisir toutes les informations nécessaires. Comme une telle saisie est particulièrement fastidieuse et source d'erreurs, on a réalisé depuis longtemps des appareils dans lesquels un clavier comporte autant de touches que d'articles dont la gestion doit être suivie. Par exemple, dans des entreprises de restauration rapide, des appareils de point de vente comportent un clavier sur lequel chaque touche désigne un article. La désignation d'une touche provoque la lecture d'un prix correspondant et son affichage, avec éventuellement impression d'un ticket portant à la fois la nature de l'article et son libellé. Lorsque les prix sont modifiés, il suffit que les nouveaux prix soient chargés dans une mémoire de l'appareil. Cependant, ces appareils sont en général utilisés en nombre important dans un même magasin, et le changement du barème de prix doit être simultané dans tous les appareils. Les inconvénients de ces appareils sont d'une part la difficulté et le coût de la modification des claviers, et d'autre part le faible nombre d'articles que peuvent gérer ces appareils, étant donné la surface restreinte du clavier et la dimension minimale que doivent avoir les touches pour être manoeuvrées séparément.

Compte tenu des inconvénients respectifs de différents systèmes considérés, il serait souhaitable de disposer d'appareils de point de vente permettant une remise à jour rapide et peu onéreuse des claviers, permettant une saisie complète du libellé des articles, et permettant la gestion d'un très grand nombre d'articles, pouvant atteindre plusieurs milliers, avec un nombre minimal de manipulations et une réduction au minimum des erreurs.

On connaît déjà des "écrans tactiles", c'est-à-dire des écrans de visualisation dont la fenêtre d'affichage est recouverte d'un dispositif de saisie tactile. Plus précisément, ces dispositifs sont sensibles à un contact ou à la proximité d'un objet électrostatiquement chargé (par exemple un doigt d'une main) et sont capables d'indiquer l'emplacement de ce contact sur le dispositif. On a déjà utilisé de tels dispositifs par exemple pour la transmission de commandes à un ordinateur. Leur avantage est de permettre de désigner une zone, la signification de celle-ci étant déterminée en fonction du libellé affiché sous cette zone.

L'invention concerne la résolution des problèmes posés par les appareils connus, par adaptation de tels écrans tactiles aux installations comprenant des appareils de point de vente, et par réalisation d'appareils destinés à de telles installations.

Plus précisément, l'invention concerne une installation de vente qui comprend un dispositif de gestion relié à au moins un appareil de point de vente, chaque appareil comprenant :
un dispositif de saisie tactile,
un premier dispositif de saisie de données représentatives d'au moins un article, comprenant une première partie du dispositif de saisie tactile,
un second dispositif de saisie de données de commande comprenant une seconde partie du dispositif de saisie tactile,
un dispositif d'exécution destiné à effectuer au moins une opération de validation d'une transaction relative à l'article, et
un dispositif de visualisation.

Selon l'invention, l'installation est telle que :
le dispositif de visualisation est un écran de visualisation sur au moins une partie duquel est placé le dispositif transparent de saisie tactile,
la première partie du dispositif de saisie tactile relative au premier dispositif est placée au dessus d'une première zone de l'écran, cette zone affichant des informations relatives aux articles,
la seconde partie du dispositif de saisie tactile relative au second dispositif de saisie est placée au-dessus d'une seconde zone de l'écran, cette zone affichant des informations relatives à des commandes,
le dispositif de gestion commande les affectations des parties de l'écran à la première et à la seconde zone, en fonction d'un premier ensemble d'informations relatives aux éléments de transactions possibles.

Il est avantageux que les informations relatives aux transactions effectuées par les différents appareils de point de vente soient conservées par le dispositif de gestion.

Il est aussi avantageux que l'installation comporte en outre un dispositif de connexion du dispositif de gestion à un dispositif extérieur capable de lui transmettre des informations de même nature que celles qui lui sont fournies par les appareils de point de vente.

L'invention concerne aussi un appareil de point de vente comprenant :
un dispositif de saisie tactile,
un premier dispositif de saisie de données représentatives d'au moins un article, comprenant une première partie du dispositif de saisie tactile,
un second dispositif de saisie de données de commande comprenant une seconde partie du dispositif de saisie tactile,
un dispositif d'exécution destiné à effectuer au moins une opération de validation d'une transaction relative à l'article et à obéir aux commandes du dispositif de saisie de données de commande et à exécuter les opérations indiquées par celles-ci, et
un dispositif de visualisation.

Selon l'invention :
le dispositif de visualisation est un écran de visualisation sur au moins une partie duquel est placé le dispositif transparent de saisie tactile,
la première partie du dispositif de saisie tactile relative au premier dispositif de saisie est placée au-dessus d'une première zone de l'écran, cette zone affichant des informations relatives aux articles,
la seconde partie du dispositif de saisie tactile relative au second dispositif est placée au-dessus d'une seconde zone de l'écran, cette zone affichant des informations relatives à des commandes.

De préférence, l'appareil ne comporte aucun organe de saisie autre que le dispositif transparent de saisie tactile.

Il est aussi avantageux que, après certaines saisies au moins, l'une au moins des première et seconde zones de l'écran soit modifiée.

En outre, il est avantageux que l'une au moins des première et seconde zones soit morcelée et comprenne plusieurs parties séparées.

De préférence, le dispositif transparent de saisie tactile ne recouvre qu'une partie de l'écran de visualisation, et la partie de l'écran qui n'est pas couverte par le dispositif de saisie affiche des éléments d'information relatifs à la transaction en cours.

Dans un mode de réalisation particulier, les informations relatives aux articles sont affichées sur l'écran sous forme d'un libellé, d'un prix et d'un cadre, continu ou discontinu.

Dans un autre mode de réalisation, le dispositif d'exécution comporte une imprimante éditant un justificatif de la transaction réalisée et éventuellement un dispositif supplémentaire d'affichage visible par le client.

D'autres caractéristiques et avantages de l'invention ressortiront mieux de la description qui va suivre, faite en référence au dessin annexé sur lequel :
- la figure 1 est un diagramme synoptique très simple indiquant l'organisation d'une installation selon l'invention ;
- la figure 2 est une élévation latérale schématique d'un appareil de point de vente selon l'invention, après enlèvement d'un côté du boîtier afin que les éléments internes apparaissent ; et
- la figure 3 est une élévation frontale de l'appareil de la figure 2.

### Description détaillée du meilleur mode de réalisation

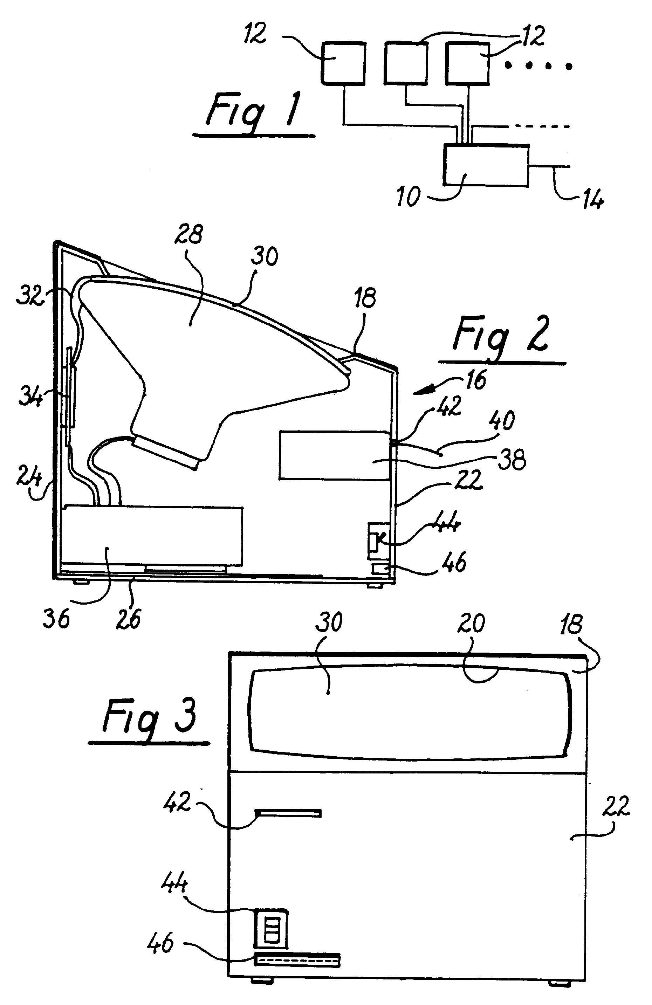

La figure 1 représente schématiquement l'organisation d'une installation de vente selon l'invention, comprenant un dispositif central de gestion 10 et plusieurs appareils 12 de point de vente, reliés chacun au dispositif de gestion. En outre, dans une variante avantageuse, le dispositif de gestion 10 comporte un dispositif d'entrée-sortie permettant l'échange d'informations avec un dispositif extérieur à l'installation, comme décrit en détail dans la suite.

La figure 2 représente les principaux éléments d'un appareil de point de vente de l'installation. L'appareil comporte un boîtier 16 ayant la forme d'un parallélépipède, avec cependant une face supérieure 18 inclinée vers l'avant, et faisant de préférence un angle de 15 à 30° environ avec un plan horizontal. Cette face supérieure 18 a une ouverture 20 de forme sensiblement rectangulaire. Le boîtier a en outre des faces avant 22, arrière 24 et inférieure 26, ainsi que des faces latérales.

Un tube à rayons cathodiques 28 formant un écran de visualisation est placé sous l'ouverture 20 et en face de celle-ci, et il en est séparé par une feuille plate 30 épousant la courbure de l'écran du tube à rayons cathodiques et appartenant à un dispositif de saisie tactile qui comporte, en plus de la feuille 30, un faisceau de fils de liaison 32 et un circuit convertisseur 34.

Le dispositif de saisie tactile peut être d'un type disponible dans le commerce. Il peut par exemple s'agir d'un "écran tactile" Sud Alim/RGB sur lequel des "touches", en nombre maximal égal à 96, sont déjà délimitées et restreignent donc dans une certaine mesure les possibilités de présentation des informations. Il est donc préférable d'utiliser des écrans tactiles ayant une meilleure résolution, par exemple à 256x256 ou 1024x1024 éléments, qui donnent une plus grande souplesse d'interactivité.

Le tube à rayons cathodiques 28 et le dispositif 30, 32, 34 de saisie tactile sont reliés au dispositif 10 de gestion par l'intermédiaire d'un circuit d'interface désigné par la référence 36.

On note enfin sur la figure 2 la présence d'une imprimante 38 destinée à imprimer des tickets 40 représentatifs des transactions, par exemple des tickets de caisse, sortant par une fente 42 de la face avant 22, d'un interrupteur général 44, et d'un connecteur 46 permettant le raccordement d'un dispositif extérieur.

Selon une caractéristique de l'invention, l'écran affiche d'une part des informations relatives aux articles qui peuvent être l'objet de transactions, et d'autre part des informations relatives à des commandes, et ces informations sont modifiées après certaines opérations de saisie au moins.

Cette caractéristique apparaîtra plus clairement dans la description qui suit d'un exemple de fonctionnement d'une installation selon l'invention dans un exemple d'application à la gestion d'un magasin de vêtements.

Lorsque l'installation est en fonctionnement et qu'une transaction précédente a été terminée, l'appareil considéré de point de vente est en attente : son écran affiche, de préférence sur une partie marginale, des informations indiquant l'état de l'appareil, c'est-à-dire qu'il est en attente. Une autre zone présente une série d'articles en promotion avec le prix correspondant, l'ensemble formé par le libellé et le prix de chaque article étant de préférence entouré par un cadre délimitant la portion d'écran dans laquelle un contact doit être réalisé pour la sélection de l'article correspondant. Une autre zone comporte un menu permettant la sélection d'une famille de vêtements, par exemple "vestes", "jupes", "pull-overs",etc. Une autre zone affiche des commandes telles que "total" ou autre, bien que, avec une première sélection d'article, une telle commande soit pas indispensable.

On suppose maintenant qu'un article en promotion est sélectionné. L'écran affiche alors une grille à proximité de l'article sélectionné afin que le nombre voulu d'articles puisse être indiqué. L'opérateur indique ce nombre et aussitôt, le dispositif central de gestion indique si le nombre voulu d'articles est disponible. Si la réponse est positive, l'appareil affiche le libellé de l'article, le nombre voulu et le prix. Si le client ne veut pas d'autre article, l'opérateur touche une zone portant l'information de commande "total" et l'appareil affiche le total et émet un ticket. La transaction est prise en compte à ce moment par le dispositif de gestion qui remet à jour les stocks et mémorise la transaction.

On suppose maintenant que l'opérateur sélectionne une partie du menu, par exemple "pull-overs". L'écran change alors et présente des informations relatives aux différents modèles de pull-overs. Lorsque l'opérateur a sélectionné un modèle, un nouvel affichage lui demande de préciser la taille, puis un nouvel affichage (ou le même) lui permet de sélectionner la couleur, le cas échéant. Enfin, il sélectionne le nombre d'articles, la suite de la transaction étant comme décrit précédemment. Après la validation de la vente d'un article, l'affichage revient au menu initial pour la sélection d'un autre article ou pour la demande de totalisation.

Bien qu'on ait décrit un mode de réalisation dans lequel l'article est sélectionné par famille d'articles et par propriétés (couleur, taille), il est aussi possible que la sélection s'effectue selon d'autres critères, par exemple d'après son fournisseur ou alphabétiquement. En particulier, la combinaison de deux possibilités de sélection ou plus est avantageuse. Ainsi, si l'opérateur ne trouve pas l'article par famille, il peut le trouver alphabétiquement par son nom.

On note ainsi que les libellés et les prix sont indiqués par programme. De cette manière, lorsque les prix changent ou lorsque des articles sont ajoutés ou retirés, l'opération peut être préparée à un emplacement déterminé, par exemple à l'aide d'un microordinateur, et celui-ci est ensuite relié au dispositif de gestion. Le nouveau programme correspondant aux nouveaux prix ou aux nouveaux articles est ainsi disponible dans tous les appareils de point de vente.

Le dispositif de gestion assure non seulement la gestion des stocks et l'établissement des commandes le cas échéant, mais aussi la tenue des statistiques de vente, et la mémorisation complète de toutes les transactions effectuées, si bien qu'une transaction particulière peut être facilement retrouvée, même après un temps relativement long, par exemple en cas de réclamation d'un client ou d'échange d'article. Bien entendu, le dispositif de gestion peut être utilisé pour la préparation d'un nouveau programme en cas de changement de prix et/ou d'articles.

Dans une variante, le dispositif de gestion peut assurer des fonctions complémentaires. Par exemple, il peut faire partie d'un dispositif de vente par des terminaux de type "Minitel" grâce à sa liaison 14, et peut ainsi réserver les articles qui sont demandés aussi bien par les appareils de point de vente que par le réseau de terminaux "Minitel".

Bien entendu, dans une autre variante, chaque appareil peut être associé à un lecteur de codes à barres, si bien que seuls les articles n'ayant pas de code à barres ou refusant la lecture sont pris en compte par le dispositif de saisie tactile selon l'invention.

Dans le mode de réalisation décrit précédemment, chaque appareil de point de vente constitue un poste d'une installation dont le dispositif de gestion constitue un autre poste, l'appareil de point de vente n'ayant pas de capacité propre de traitement. Dans une variante, chaque appareil de point de vente peut comporter une unité centrale de traitement capable d'assurer certaines opérations, par exemple la gestion de l'affichage présenté sous le dispositif de saisie tactile.

Bien qu'on ait indiqué la présence d'une imprimante dans chaque appareil de point de vente, celle-ci n'est pas indispensable. Par exemple, l'installation peut ne comporter qu'une seule imprimante partagée entre tous les appareils, ou une imprimante pour deux ou trois appareils.

## Revendications

1. Installation de vente qui comprend un dispositif de gestion (10) relié à au moins un appareil de point de vente, chaque appareil comprenant :
un dispositif (30) de saisie tactile,
un premier dispositif de saisie de données représentatives d'au moins un article, comprenant une première partie du dispositif de saisie tactile,
un second dispositif de saisie de données de commande comprenant une seconde partie du dispositif de saisie tactile,
un dispositif d'exécution destiné à effectuer au moins une opération de validation d'une transaction relative à l'article,
un dispositif de visualisation (28),
caractérisée en ce que
le dispositif de visualisation est un écran de visualisation (28) sur au moins une partie duquel est placé le dispositif transparent (30) de saisie tactile ;
la première partie du dispositif de saisie tactile relative au premier dispositif est placée au dessus d'une première zone de l'écran, cette zone affichant des informations relatives aux articles ;
la seconde partie du dispositif de saisie tactile relative au second dispositif de saisie est placée au-dessus d'une seconde zone de l'écran, cette zone affichant des informations relatives à des commandes ;
le dispositif de gestion (10) commande les affectations des parties de l'écran à la première et à la seconde zone, en fonction d'un premier ensemble d'informations relatives aux éléments de transactions possibles.

2. Installation selon la revendication 1, caractérisée en ce que les informations relatives aux transactions effectuées par les différents appareils de point de vente sont conservées par le dispositif de gestion (10).

3. Installation selon l'une des revendications 1 et 2, caractérisée en ce qu'elle comporte en outre un dispositif (46) de connexion du dispositif de gestion à un dispositif extérieur capable de lui transmettre des informations de même nature que celles qui lui sont fournies par les appareils de point de vente.

4. Appareil de point de vente comprenant :
un dispositif (30) de saisie tactile,
un premier dispositif de saisie de données représentatives d'au moins un article, comprenant une première partie du dispositif de saisie tactile,
un second dispositif de saisie de données de commande comprenant une seconde partie du dispositif de saisie tactile,
un dispositif d'exécution destiné à effectuer au moins une opération de validation d'une transaction relative à l'article et à obéir aux commandes du dispositif de saisie de données de commande et à exécuter les opérations indiquées par celles-ci,
un dispositif de visualisation (28),
caractérisé en ce que
le dispositif de visualisation (28) est un écran de visualisation sur au moins une partie duquel est placé le dispositif transparent (30) de saisie tactile,
la première partie du dispositif de saisie tactile relative au premier dispositif de saisie est placée au-dessus d'une première zone de l'écran, cette zone affichant des informations relatives aux articles,
la seconde partie du dispositif de saisie tactile relative au second dispositif est placée au-dessus d'une seconde zone de l'écran, cette zone affichant des informations relatives à des commandes.

5. Appareil selon la revendication 4, caractérisé en ce qu'il ne comporte aucun organe de saisie autre que le dispositif transparent (30) de saisie tactile.

6. Appareil selon l'une des revendications 4 et 5, caractérisé en ce que, après certaines saisies au moins, l'une au moins des première et seconde zones de l'écran est modifiée.

7. Appareil selon l'une quelconque des revendications 4 à 6, caractérisé en ce que l'une au moins des première et seconde zones est morcelée et comprend plusieurs parties séparées.

8. Appareil selon l'une quelconque des revendications 4 à 7, caractérisé en ce que le dispositif transparent (30) de saisie tactile ne recouvre qu'une partie de l'écran de visualisation, et la partie de l'écran qui n'est pas couverte par le dispositif de saisie affiche des éléments d'information relatifs à la transaction en cours.

9. Appareil selon l'une quelconque des revendications 4 à 8, caractérisé en ce que les informations relatives aux articles sont affichées sur l'écran sous forme d'un libellé, d'un prix et d'un cadre, continu ou discontinu.

10. Appareil selon l'une quelconque des revendications 4 à 9, caractérisé en ce que le dispositif d'exécution comporte une imprimante (38) éditant un justificatif de la transaction réalisée.

## Patentansprüche

1. Verkaufsvorrichtung, die ein Lagerverwaltungssystem (10) aufweist, das mit mindestens einem Verkaufpunktgerät verbunden ist, wobei jedes Gerät aufweist:
- eine Berührungserfassungsvorrichtung (30),
- eine erste Vorrichtung zum Erfassen von Daten, die mindestens eine Ware darstellen, welche einen ersten Teil der Tasterfassungsvorrichtung enthält,
- eine zweite Vorrichtung zum Erfassen von Bestellungsdaten, welche einen zweiten Teil der Berührungserfassungsvorrichtung enthält,
- eine Ausführungsvorrichtung, die dazu bestimmt ist, mindestens eine Validierungsoperation einer auf die Ware bezogenen Transaktion durchzuführen,
- eine Anzeigevorrichtung (28),
**dadurch gekennzeichnet, daß**
die Anzeigevorrichtung ein Anzeigeschirm (28) ist, auf einem Teil dessen mindestens die durchsichtige Berührungserfassungsvorrichtung (30) angeordnet ist;
der erste Teil der Berührungserfassungsvorrichtung, der zu der ersten Vorrichtung gehört, oberhalb eines ersten Bereiches des Anzeigeschirms angeordnet ist, wobei dieser Bereich auf die Waren bezogenen Informationen anzeigt;
der zweite Teil der Berührungserfassungsvorrichtung, der zu der zweiten Erfassungsvorrichtung gehört, oberhalb eines zweiten Bereiches des Anzeigeschirms angeordnet ist, wobei dieser Bereich auf Befehle bezogene Informationen anzeigt;
das Lagerverwaltungssystem (10), das Zuordnungen der Teile des Bildschirms zu dem ersten und dem zweiten Bereich steuert, und zwar in Abhängigkeit einer ersten Gesamtheit von Informationen, die sich auf Elemente möglicher Transaktionen beziehen.

2. Vorrichtung nach Anspruch 1, dadurch gekennzeichnet, daß die Informationen, die sich auf die Transaktionen beziehen, welche durch die unterschiedlichen Verkaufspunktgeräte durchgeführt werden, in dem Lagerverwaltungssystem (10) aufbewahrt werden.

3. Vorrichtung nach einem der Ansprüche 1 und 2, dadurch gekennzeichnet, daß sie außerdem eine Vorrichtung (146) zur Verbindung des Lagerverwaltungssystems mit einer externen Vorrichtung aufweist, die dazu fähig ist, ihr Informationen durchzugeben, die von der gleichen Art sind wie die, die ihr durch die Verkaufspunktgeräte geliefert werden.

4. Verkaufsvorrichtung, die aufweist:
- eine Berührungserfassungsvorrichtung (30),
- eine erste Vorrichtung zum Erfassen von Daten, die mindestens eine Ware darstellen, welche einen ersten Teil der Berührungserfassungsvorrichtung enthält,
- eine zweite Vorrichtung zum Erfassen von Bestellungsdaten, welche einen zweiten Teil der Berührungserfassungsvorrichtung enthält,
- eine Ausführungsvorrichtung die dazu bestimmt ist, mindestens eine Validierungsoperation einer auf die Ware bezogenen Transaktion auszuführen und die Befehle der Vorrichtung zum Erfassen von Befehlsdaten zu befolgen und die von diesen angezeigten Operationen auszuführen,
- eine Anzeigevorrichtung (28),
**dadurch gekennzeichnet, daß**
die Anzeigevorrichtung (28) einen Anzeigeschirm ist, auf einem Teil dessen mindestens die durchsichtige Berührungserfassungsvorrichtung (30) angeordnet ist;
der erste Teil der Berührungserfassungsvorrichtung, der zu der ersten Erfassungsvorrichtung gehört, oberhalb eines ersten Bereiches des Anzeigeschirms angeordnet ist, wobei dieser Bereich auf die Waren bezogene Informationen anzeigt;
der zweite Teil der Berührungserfassungsvorrichtung, der zu der zweiten Vorrichtung gehört, oberhalb eines zweiten Bereiches des Anzeigeschirms angeordnet ist, wobei dieser Bereich auf Befehle bezogene Informationen anzeigt.

5. Vorrichtung nach Anspruch 4, dadurch gekennzeichnet, daß sie kein anderes Erfassungsorgan aufweist als die durchsichtige Berührungserfassungsvorrichtung (30).

6. Vorrichtung nach einem der Ansprüche 4 und 5, dadurch gekennzeichnet, daß wenigsten nach manchen Erfassungen, mindestens einer der ersten und zweiten Bereiche des Anzeigeschirms geändert wird.

7. Vorrichtung nach einem der Ansprüche 4 bis 6, dadurch gekennzeichnet, daß mindestens einer der ersten und zweiten Bereiche zerstückelt ist und mehrere getrennte Teile aufweist.

8. Vorrichtung nach einem der Ansprüche 4 bis 7, dadurch gekennzeichnet, daß die durchsichtige Berührungserfassungsvorrichtung (30) nur einen Teil des Anzeigeschirms bedeckt und der Teil des Anzeigeschirms, der durch die Erfassungsvorrichtung nicht bedeckt ist, Informationselemente anzeigt, die sich auf die Transaktion die gerade im Gange ist, beziehen.

9. Vorrichtung nach einem der Ansprüche 4 bis 8, dadurch gekennzeichnet, daß die auf die Waren bezogenen Informationen auf dem Anzeigeschirm in der Form einer Aufzeichnung, eines Preises und eines Rahmens, kontinuierlich oder diskontinuierlich angezeigt werden.

10. Vorrichtung nach einem der Ansprüche 4 bis 9, dadurch gekennzeichnet, daß die Ausführungsvorrichtung einen Drucker (38) aufweist, der einen Nachweis der durchgeführten Transaktion ausgibt.

## Claims

1. A sales installation comprising a control device (10) connected to at least one point-of-sale apparatus, each apparatus comprising:
a touch-sensitive input device (30);
a first device for inputting data representative of at least one article, comprising a first portion of the touch-sensitive input device;
a second device for inputting command data comprising a second portion of the touch-sensitive input device;
a performance device designed to perform at least one transaction validation operation relating to the article; and
a display device (28);
the installation being characterized in that:
the display device is a display screen (28) having the transparent touch-sensitive input device (30) placed over at least a portion thereof;
the first portion of the touch-sensitive device relating to the first device is placed over a first zone of the screen, said zone displaying information relating to articles;
the second portion of the touch-sensitive input device relating to the second input device is placed over a second zone of the screen, said zone displaying information relating to commands; and
the control device (10) controls the allocations of portions of the screen to the first zone and to the second zone as a function of a first set of information relating to elements of possible transactions.

2. An installation according to claim 1, characterized in that the information relating to transactions performed by the various point-of-sale apparatuses are stored by the control device (10).

3. An installation according to claim 1 or 2, characterized in that it further includes a device (46) for connecting the control device to an external device capable of transmitting thereto information of the same kind as the information supplied thereto by the point-of-sale apparatuses.

4. A point-of-sale apparatus comprising:
a touch-sensitive input device (30);
a first device for inputting data representative of at least one article, comprising a first portion of the touch-sensitive input device;
a second device for inputting command data and comprising a second portion of the touch-sensitive input device;
a performance device designed to perform at least one transaction validation operation relating to an article and to obey commands from the command data input device and to perform the operations specified thereby; and
a display device (28);
characterized in that:
the display device is a display screen having the transparent device (30) for touch-sensitive input placed over at least a portion thereof;
the first portion of the touch-sensitive input device relating to the first input device is placed over a first zone of the screen, said zone describing information relating to articles; and
the second portion of the touch-sensitive input device relating to the second device is placed over a second zone of the screen, said zone displaying information relating to commands.

5. Apparatus according to claim 4, characterized in that it includes no input member other than the transparent device (30) for touch-sensitive input.

6. Apparatus according to claim 4 or 5, characterized in that after at least some inputs, at least one of the first and second zones of the screen is modified.

7. Apparatus according to any one of claims 4 to 6, characterized in that at least one of the first and second zones is split up and comprises a plurality of separate portions.

8. Apparatus according to any one of claims 4 to 7, characterized in that the transparent device (30) for touch-sensitive input covers only a portion of the display screen, and the portion of the screen which is not covered by the display device displays items of information relating to the current transaction.

9. Apparatus according to any one of claims 4 to 8, characterized in that the information relating to articles is displayed on the screen in the form of a specification, a price, and an outline which may be continuous or discontinuous.

10. Apparatus according to any one of claims 4 to 9, characterized in that the performance device includes a printer (38) for issuing proof of the transaction performed.
